(19) Europäisches Patentamt / European Patent Office / Office européen des brevets

(11) **EP 4 760 624 A1**

(12) **EUROPEAN PATENT APPLICATION**
published in accordance with Art. 153(4) EPC

(43) Date of publication:
**17.06.2026 Bulletin 2026/25**

(21) Application number: **24865000.4**

(22) Date of filing: **24.05.2024**

(51) International Patent Classification (IPC):
$G06Q\ 50/04\ ^{(2012.01)}$ $G06Q\ 10/04\ ^{(2023.01)}$

(52) Cooperative Patent Classification (CPC):
**G06Q 10/04; G06Q 50/04**

(86) International application number:
**PCT/JP2024/019249**

(87) International publication number:
**WO 2025/057492 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.09.2023 JP 2023148720**

(71) Applicant: **JFE Steel Corporation Tokyo, 100-0011 (JP)**

(72) Inventor: **SUZUKI, Katsuya Tokyo 100-0011 (JP)**

(74) Representative: **Hoffmann Eitle Patent- und Rechtsanwälte PartmbB Arabellastraße 30 81925 München (DE)**

(54) **ENERGY OPERATION SUPPORT DEVICE, ENERGY OPERATION SUPPORT SYSTEM, ENERGY OPERATION DEVICE, DISPLAY TERMINAL DEVICE, ENERGY OPERATION SUPPORT METHOD, AND STEEL MILL OPERATION METHOD**

(57)    An energy operation support device in a steel mill includes: an optimization unit configured to optimize operation of an energy utility in a facility in the steel mill; and an upper-limit relaxation unit configured to set an operational upper limit, which is an upper limit in operation, with respect to a facility upper limit, which is an upper limit in output of facility capacity of the facility, in which the upper-limit relaxation unit is configured to set the operational upper limit at a target time or in a target calculation period by determining a predetermined ratio with respect to the facility upper limit, and a total energy operation cost of the steel mill and an adjustment variable of an energy utility with a difference between the facility upper limit and the operational upper limit as an upper limit are included as an objective function of optimization calculation in the optimization unit.

FIG.2

EP 4 760 624 A1

**Description**

Field

The present invention relates to an energy operation support device, an energy operation support system, an energy operation device, a display terminal device, an energy operation support method, and a steel mill operation method.

Background

In general, a steel mill includes a large number of factories and a plurality of power generation facilities from upstream processes (e.g., blast furnace, coke oven, and steelmaking process) to downstream processes (e.g., rolling process and surface treatment process), and operates the following energy (gas, steam, and electricity). That is, by-product gas is used in the factories and the power generation facilities. The by-product gas includes: blast furnace gas (B gas) generated in a blast furnace; coke oven gas (C gas) generated in a coke oven; and LD converter gas (LD gas) generated in a converter. Furthermore, mixed gas (M gas) obtained by mixing these by-product gases and adjusting a calorific value is also used in the factories and the power generation facilities.

Here, when a gas supply amount is insufficient with respect to a factory demand (e.g., demand amount in heating furnace of rolling factory), supplementation is performed with city gas to satisfy the factory demand. Furthermore, when a gas supply amount to a power generation facility is insufficient with respect to a predetermined amount, supplementation is performed with heavy oil. These supplementary fuels cost depending on use amounts. In contrast, when the gas supply amount is surplus to the factory demand, the gas is rendered harmless by combustion and released into the atmosphere. Since the operation leads to energy loss and carbon dioxide emissions, the operation should be minimized. In order to reduce cost and inhibit the release, it is necessary to use a gas holder, which is a storage facility for by-product gas, and appropriately adjust a gas distribution amount.

For example, by-product gas is accumulated in the gas holder in preference to release in an aspect in which a supply amount of the by-product gas is larger than a demand amount thereof. The gas holder thereby increases the storage level (gas holder level), and inhibits the release. In contrast, in an aspect in which a demand amount of by-product gas is larger than a supply amount thereof, stored gas is discharged from the gas holder to satisfy the demand and reduce a use amount of a supplementary fuel. Furthermore, when the demand amount of by-product gas is further larger than the supply amount thereof, output of a power generation facility is decreased. Furthermore, if it is still impossible to deal with the aspects, a factory operating level may be lowered.

Steam is supplied by a waste heat recovery boiler from LD gas and a sintering furnace, a steam accumulator, which is a storage facility for steam, coke drying quenching (CDQ) boiler, and extraction steam from an intermediate stage of a turbine of a power generation facility. Note that the extraction steam is obtained by an operation of obtaining steam from an intermediate stage of a turbine. Extraction steam decreases a power generation amount of a power generation facility. Furthermore, steam is used in a factory (maintaining the temperature of pickling tanks in cold rolling mills and vacuum degassing equipment). Purchase from the outside is performed for an insufficient amount with respect to a steam demand. Furthermore, an electricity demand of a factory is satisfied by a power generation amount in CDQ, a top-pressure recovery turbine (TRT), and a power generation facility and electricity purchased from an electric power company.

An amount of purchased electricity needs to be managed so as not to exceed a contracted amount (upper limit of amount of purchased electricity) per hour. Furthermore, a unit price of purchased electricity differs depending on time slots. Thus, in a case where a time slot has a high unit price and there is a surplus in a by-product gas supply amount, the amount of purchased electricity is reduced by setting output of a power generation facility high, for example. An operating condition that minimizes cost differs depending on time slots and supply and demand conditions. From such background, a technique of optimizing energy operation cost of a steel mill has been proposed.

For example, Patent Literature 1 proposes a method of solving a mixed integer programming problem in order to determine an optimal energy operation condition of a steel mill. In the mixed integer programming problem, an operating condition and an operating rule of a plant are written as constraint expressions by providing upper and lower limits in a decision variable.

Citation List

Patent Literature

Patent Literature 1: Japanese Patent No. 7028272 Summary

Technical Problem

Aging deterioration of equipment, however, makes output at the upper limit of facility capacity difficult. If a facility continues to be used without considering the upper limit in operation (hereinafter, referred to as "operational upper limit") which falls below a facility upper limit, deterioration of the facility may be promoted. Furthermore, also in a case of startup and shutdown associated with equipment stoppage, a similar problem needs to be considered in consideration of responsiveness of equipment stoppage.

In contrast, if the facility is operated at an operational upper limit uniformly decreased from the facility upper limit, deterioration of the facility can be prevented, but the operational cost increases. Therefore, the operational cost needs to be minimized in consideration of upper-limit relaxation of the operational upper limit.

The present invention has been made in view of the above, and an object thereof is to provide an energy operation support device, an energy operation support system, an energy operation device, a display terminal device, an energy operation support method, and a steel mill operation method capable of achieving both prevention of equipment deterioration and optimization of operational cost by determining an operational upper limit with respect to a facility upper limit, evaluating the operational cost, and relaxing the operational upper limit.

Solution to Problem

To solve the above-described problem and achieve the object, an energy operation support device in a steel mill according to the present invention includes: an optimization unit configured to optimize operation of an energy utility in a facility in the steel mill; and an upper-limit relaxation unit configured to set an operational upper limit, which is an upper limit in operation, with respect to a facility upper limit, which is an upper limit in output of facility capacity of the facility, wherein the upper-limit relaxation unit is configured to set the operational upper limit at a target time or in a target calculation period by determining a predetermined ratio with respect to the facility upper limit, and a total energy operation cost of the steel mill and an adjustment variable of an energy utility with a difference between the facility upper limit and the operational upper limit as an upper limit are included as an objective function of optimization calculation in the optimization unit.

Moreover, in the above-described energy operation support device according to the present invention, the optimization unit is configured to perform the optimization calculation under a constraint condition in which output of the facility is set to be equal to or less than a sum of the operational upper limit and the adjustment variable.

Moreover, in the above-described energy operation support device according to the present invention, the total energy operation cost and cost associated with the adjustment variable are included as an objective function of optimization calculation in the optimization unit, and the cost associated with the adjustment variable is calculated based on a unit price of the energy utility and a predetermined weighting coefficient.

Moreover, in the above-described energy operation support device according to the present invention, the energy utility is a power generation amount given by a power generation facility, and the unit price of the energy utility is cost associated with a unit price of purchased electricity.

Moreover, the above-described energy operation support device according to the present invention further includes a response characteristic calculation unit configured to calculate a facility upper limit in consideration of a response characteristic of the energy utility in a transition period from shutdown to operation or a transition period from operation to shutdown based on an equipment shutdown plan, and the upper-limit relaxation unit is configured to set the operational upper limit by using a facility upper limit in consideration of the response characteristic.

Moreover, in the above-described energy operation support device according to the present invention, the energy utility includes an amount of power generated by a power generation facility, a by-product gas generation amount, and a steam generation amount.

Moreover, the above-described energy operation support device according to the present invention further includes an output unit configured to output information calculated by the optimization unit, the information containing an operating condition of an energy utility in the facility.

To solve the above-described problem and achieve the object, an energy operation support system according to the present invention in a steel mill includes an energy operation support device and a display terminal device, includes: an optimization unit configured to optimize operation of an energy utility in a facility in the steel mill; an upper-limit relaxation unit configured to set an operational upper limit, which is an upper limit in operation, with respect to a facility upper limit, which is an upper limit in output of facility capacity of the facility; an output unit configured to output information calculated by the optimization unit, the information including an operation condition of an energy utility in the facility; an information acquisition unit configured to acquire information including an operating condition of an energy utility, which has been optimized, in the facility; and an information display unit configured to display information acquired by the information acquisition unit, wherein the upper-limit relaxation unit is configured to set the operational upper limit at a target time or in a target calculation period by determining a predetermined ratio with respect to the facility upper limit, and a total energy operation cost of the steel mill and an adjustment variable of an energy utility with a difference between the facility upper limit and the operational upper limit as an upper limit are included as an objective function of optimization calculation in the optimization unit.

Moreover, in the above-described energy operation support system according to the present invention, the optimization unit is configured to perform optimization calculation under a constraint condition in which output of the facility is set to be equal to or less than a sum of the operational upper limit and the adjustment variable.

Moreover, in the above-described energy operation support system according to the present invention, the total energy operation cost and cost associated with the adjustment variable are included as an objective function of optimization calculation in the optimization unit, and the cost associated with the adjustment variable is calculated based on a unit price of the energy utility and a predetermined weighting coefficient.

Moreover, in the above-described energy operation support system according to the present invention, the energy utility is a power generation amount given by a power generation facility, and the unit price of the energy utility is cost associated with a unit price of purchased electricity.

Moreover, the above-described energy operation support system according to the present invention further includes a response characteristic calculation unit configured to calculate a facility upper limit in consideration of a response characteristic of the energy utility in a transition period from shutdown to operation or a transition period from operation to shutdown based on an equipment shutdown plan, and the upper-limit relaxation unit is configured to set the operational upper limit by using a facility upper limit in consideration of the response characteristic.

Moreover, the above-described energy operation support system according to the present invention further includes a tuning screen display unit configured to set and display the predetermined ratio of the operational upper limit with respect to the facility upper limit and a weighting coefficient of cost associated with the adjustment variable.

To solve the above-described problem and achieve the object, an energy operation device according to the present invention controls a facility in a steel mill under an operating condition of an energy utility, which has been output from an output unit of the above-described energy operation support device.

To solve the above-described problem and achieve the object, an energy operation device controls a facility in a steel mill under an operating condition of an energy utility, which has been output from an output unit of the above-described energy operation support system.

To solve the above-described problem and achieve the object, a display terminal device according to the present invention constituting an energy operation support system in a steel mill includes: an information acquisition unit configured to acquire information including an operating condition of an energy utility, which has been optimized, in a facility in the steel mill; and an information display unit configured to display the information, wherein the information includes an operating condition of an energy utility, which has been optimized, in the facility, the operating condition of an energy utility being calculated by optimization calculation that minimizes an objective function including a cost associated with an adjustment variable of an energy utility, which relaxes an operational upper limit determined with respect to a facility upper limit in output of energy equipment of the steel mill, and a total energy operation cost of the steel mill.

In the above-described display terminal device according to the present invention, the display terminal device includes a tuning screen display unit configured to set and display a predetermined ratio of the operational upper limit used in the optimization calculation with respect to the facility upper limit and a weighting coefficient of the cost associated with the adjustment variable with respect to the total energy operation cost of the steel mill, and the information display unit is configured to display the information calculated by optimization calculation using the predetermined ratio set and displayed by the tuning screen display unit and the weighting coefficient.

To solve the above-described problem and achieve the object, an energy operation support method according to the present invention, by an energy operation support device in a steel mill, includes: an optimization step of optimizing operation of an energy utility in a facility in the steel mill; and an operational upper limit setting step of setting an operational upper limit, which is an upper limit in operation, with respect to a facility upper limit, which is an upper limit in output of facility capacity of the facility, wherein, in the operational upper limit setting step, the operational upper limit at a target time or in a target calculation period is set by determining a predetermined ratio with respect to the facility upper limit, and a total energy operation cost of the steel mill and an adjustment variable of an energy utility with a difference between the facility upper limit and the operational upper limit as an upper limit are included as an objective function of optimization calculation in the optimization step.

Moreover, the above-described energy operation support method according to the present invention further includes a response characteristic calculation step of the energy operation support device calculating a facility upper limit in consideration of a response characteristic of the energy utility in a transition period from shutdown to operation or a transition period from operation to shutdown based on an equipment shutdown plan, wherein, in the operational upper limit setting step, the operational upper limit is set by using a facility upper limit in consideration of the response characteristic.

To solve the above-described problem and achieve the object, a steel mill operation method according to the present invention includes a step of operating a steel mill in accordance with a decision variable calculated by optimization calculation of the above-described energy operation support method.

Advantageous Effects of Invention

In the energy operation support device, the energy operation support system, the energy operation device, the display terminal device, the energy operation support method, and the steel mill operation method according to the present invention, an operational upper limit is determined with respect to a facility upper limit, operational cost is evaluated, and the operational upper limit is relaxed, so that both prevention of equipment deterioration and optimization of the operational cost can be achieved.

Brief Description of Drawings

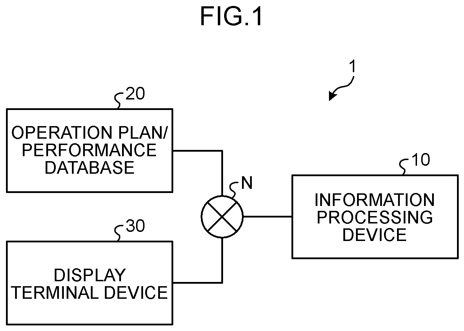

FIG. 1 illustrates a schematic configuration of an energy operation support system according to an embodiment of the present invention.

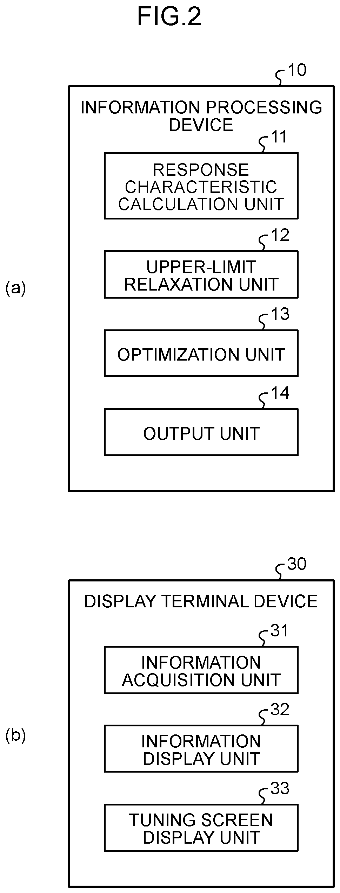

FIG. 2 includes: (a) of FIG. 2 illustrating a schematic configuration of an information processing device that implements an energy operation support device according to the embodiment of the present invention; and (b) of FIG. 2 illustrating a schematic configuration of a display terminal device according to the embodiment of the present invention.

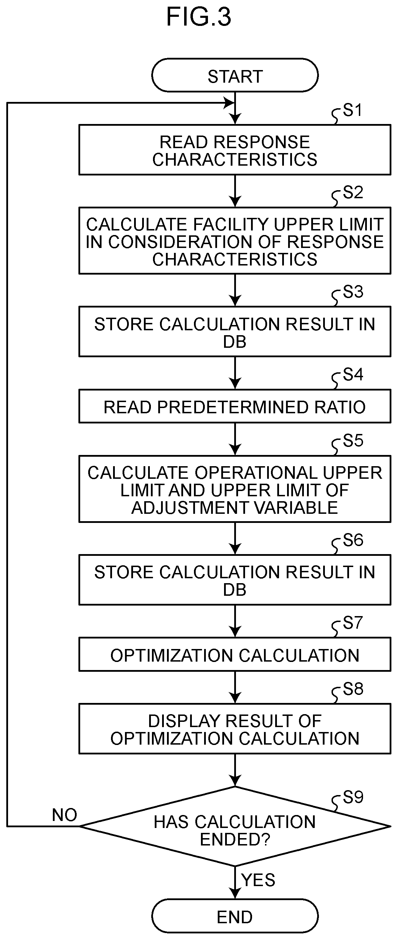

FIG. 3 is a flowchart illustrating a flow of an energy operation support method executed by the energy operation support device according to the embodiment of the present invention.

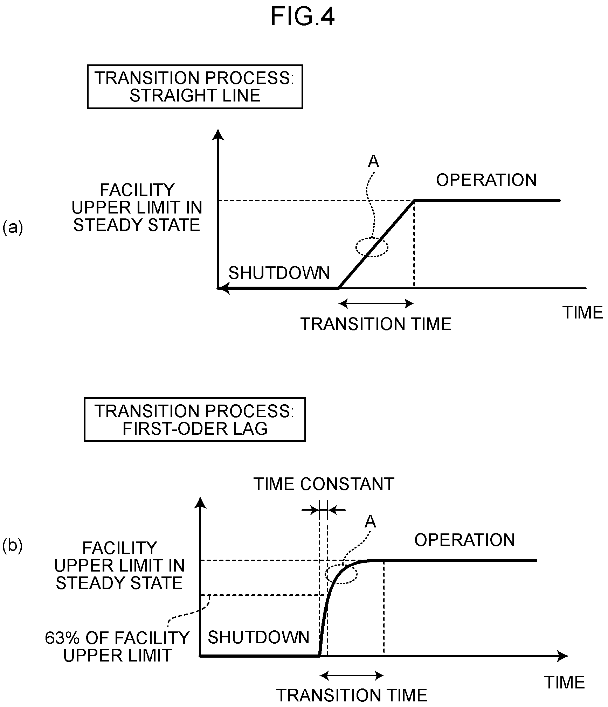

FIG. 4 illustrates an example of response characteristics in a case where a transition process of a response in a transition period from equipment shutdown to operation is set as a straight line and an exponential function (first-order lag) in a response characteristic calculation step of the energy operation support method according to the embodiment of the present invention.

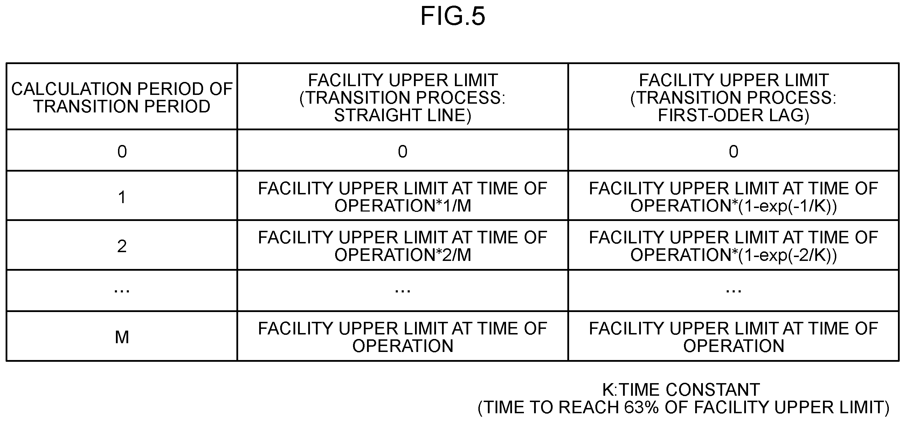

FIG. 5 illustrates an example of a facility upper limit in a case where the transition process of a response in the transition period from equipment shutdown to operation is set as a straight line and an exponential function (first-order lag) in the response characteristic calculation step of the energy operation support method according to the embodiment of the present invention.

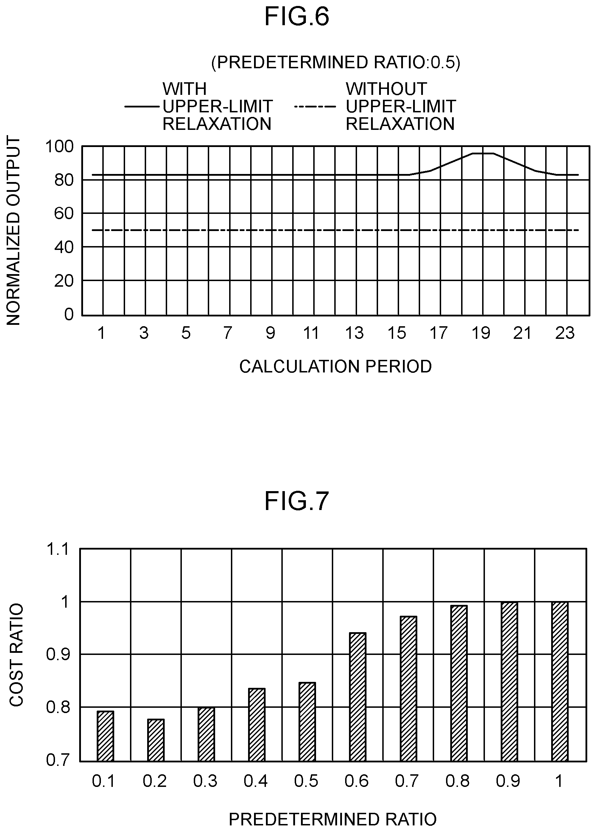

FIG. 6 illustrates an example of the present invention, and illustrates normalized output (value obtained by dividing power generation output by facility upper limit and centuplicating result) in a case where optimization calculation was performed by setting a predetermined ratio with respect to a facility upper limit of a certain power generation facility to 0.5 and setting the weight of an adjustment variable to 0.01.

FIG. 7 illustrates the example of the present invention, and illustrates a cost ratio (operational cost with relaxation ÷ operational cost without relaxation) calculated by setting the predetermined ratio with respect to the facility upper limit of the certain power generation facility at 0.1 intervals from 0.1 to 1.0 and setting the weight of the adjustment variable to 0.01.

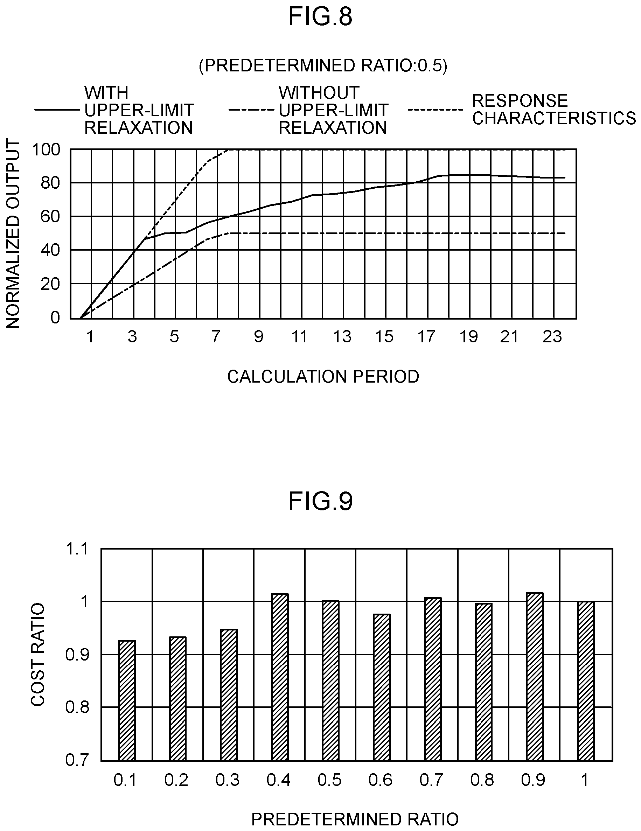

FIG. 8 illustrates an example of the present invention, and illustrates normalized output (value obtained by dividing power generation output by facility upper limit and centuplicating result) in a case where optimization calculation was performed by setting a predetermined ratio with respect to a facility upper limit of a certain power generation facility to 0.5 and setting the weight of an adjustment variable to 0.01 in consideration of response characteristics in a transition period from equipment shutdown to operation.

FIG. 9 illustrates the example of the present invention, and illustrates a cost ratio (operational cost with relaxation ÷ operational cost without relaxation) calculated by setting the predetermined ratio with respect to the facility upper limit of the certain power generation facility at 0.1 intervals from 0.1 to 1.0 and setting the weight of the adjustment variable to 0.01 in consideration of the response characteristics in the transition period from equipment shutdown to operation.

Description of Embodiments

An energy operation support device, an energy operation support system, an energy operation device, a display terminal device, an energy operation support method, and a steel mill operation method according to an embodiment of the present invention will be described with reference to the drawings. Note that components in the following embodiment include those that can be easily replaced by those skilled in the art or those that are substantially the same.

(Energy Operation Support System)

The energy operation support system including the energy operation support device according to the embodiment will be described with reference to FIG. 1. The energy operation support system is used in, for example, a steel mill, and calculates an optimal energy operation condition (condition related to operation of energy utilities) in the steel mill. As illustrated in the figure, an energy operation support system 1 includes an information processing device 10, an operation plan/performance database 20, and a display terminal device 30. Furthermore, the energy utilities include, for example, gas, steam, and electricity.

The information processing device 10, the operation plan/performance database 20, and the display terminal device 30 can communicate with each other via a network N such as an Internet line network. The display terminal device 30 of the energy operation support system is disposed in, for example, the steel mill.

(Energy Operation Support Device)

The information processing device 10 that implements the energy operation support device according to the embodiment will be described with reference to (a) of FIG. 2. The information processing device 10 is implemented by, for example, a general-purpose computer, such as a workstation and a personal computer, or a server disposed on a cloud. The information processing device 10 may include a plurality of computers connected via a network. Furthermore, the information processing device 10 may include an information input unit such as a keyboard, a mouse pointer, and a numeric keypad.

The information processing device 10 includes a processor (arithmetic processing device) and a memory (main storage unit). The processor includes, for example, a central processing unit (CPU). The memory includes a random access memory (RAM) and a read only memory (ROM). Then, the processor controls components and the like by executing a computer program to implement a function that matches a predetermined purpose. The information processing device 10 functions as a response characteristic calculation unit 11, an upper-limit relaxation unit 12, and an optimization unit 13 through execution of the above-described computer program.

Furthermore, the information processing device 10 may include a storage unit that stores various process results. The storage unit includes a recording medium such as an erasable programmable ROM (EPROM), a hard disk drive (HDD), a solid state drive (SSD), and a removable medium. Examples of the removable medium include a universal serial bus (USB) memory and a disk recording medium such as a compact disc (CD), a digital versatile disc (DVD), and a Blu-ray (registered trademark) disc (BD).

The response characteristic calculation unit 11 calculates a facility upper limit in consideration of the response characteristics of the energy utility in a transition period from shutdown to operation or a transition period from operation to shutdown based on an energy equipment shutdown plan. Note that specific process contents in the response characteristic calculation unit 11 will be described later (see FIGS. 3 to 5 to be described later). Furthermore, the process in the response characteristic calculation unit 11 may be performed immediately before the process of the upper-limit relaxation unit 12 and the optimization unit 13, or may be preliminarily performed at timing different from the timing when the process of the upper-limit relaxation unit 12 and the optimization unit 13 is performed.

The upper-limit relaxation unit 12 sets an operational upper limit on a facility upper limit. The operational upper limit is an upper limit in operation. The facility upper limit is an upper limit in output of the facility capacity of energy equipment. The upper-limit relaxation unit 12 sets the operational upper limit at a target time or in a target calculation period by determining a predetermined ratio with respect to the facility upper limit. Furthermore, the upper-limit relaxation unit 12 may set the operational upper limit by using a facility upper limit in consideration of response characteristics calculated by the response characteristic calculation unit 11, or may set the operational upper limit without using a facility upper limit in consideration of response characteristics. Note that specific process contents in the upper-limit relaxation unit 12 will be described later (see FIG. 3 to be described later).

The optimization unit 13 optimizes operation of energy utilities in energy equipment in a steel mill. The optimization unit 13 acquires, from the operation plan/performance database 20, information on energy utilities for factories constituting the steel mill and information on an operation plan of energy equipment in the steel mill to perform optimization calculation.

Examples of the "information on energy utilities" here include actual values and predicted values of generation amounts of energy utilities and actual values and predicted values of consumption amounts of energy utilities. Furthermore, examples of the "energy utilities" include electricity (amount of power generated by power generation facility), gas (by-product gas generation amount), and steam (steam generation amount). Furthermore, examples of the "information on an operation plan of energy equipment" include setting values of energy equipment and contract values of transaction contracts. Furthermore, examples of the "energy equipment" include mixed gas production equipment, a gas holder, a steam accumulator, a top-pressure recovery turbine facility, and a power generation facility that uses by-product gas, heavy oil, or extraction steam. Furthermore, examples of the "transaction contracts" include purchase contracts associated with uses of, for example, heavy oil, city gas, and steam and purchase contracts associated with purchased electricity.

An objective function in optimization calculation of the optimization unit 13 includes total energy operation cost (total $\_cost(k)$) of the steel mill and an adjustment variable ($dSUB_{POW\ j}(k)$) of an energy utility (see Mathematical Expression (17) to be described later). Furthermore, more specifically, the above-described objective variable includes total energy operation cost (total $\_cost(k)$) of the steel mill and cost ($wP_{ELE}(k)\ dSUB_{POW\ j}(k)$) associated with the adjustment variable of an energy utility.

Examples of the "total energy operation cost" here include costs associated with uses of heavy oil, city gas, and steam and cost associated with purchased electricity. Furthermore, the "adjustment variable" is used for adjusting output to relax the operational upper limit, and is used for adjusting a degree of changing the operational upper limit. The adjustment variable has a lower limit of 0 and an upper limit of the difference between the facility upper limit and the operational upper limit (see Mathematical Expression (15) to be described later). Furthermore, the "cost associated with the adjustment variable" is calculated based on unit price of the energy utility and a predetermined weighting coefficient (see Mathematical Expression (17) to be described later). Furthermore, examples of the "unit price of the energy utility" include cost associated with the unit price of purchased electricity, cost associated with the unit price of purchased steam, cost associated with the unit price of purchased heavy oil, and cost associated with the unit price of purchased city gas.

The optimization unit 13 transmits information such as a result of optimization calculation to another terminal device and another information processing device via the network N. Note that specific process contents in the optimization unit 13 will be described later (see FIG. 3 to be described later).

The information processing device 10 may include an output unit 14 that transmits various types of information to another terminal device and another information processing device via the network N. The output unit 14 outputs information calculated by the optimization unit 13. The information contains operating conditions of energy utilities in a facility in a steel mill. Examples of the information transmitted by the output unit 14 include a condition of operation of energy utilities (energy operation condition) in the facility in the steel mill. The condition is specifically contained in decision variables (see Tables 4 and 5) calculated by the optimization unit 13 in the optimization calculation.

Furthermore, the other information processing device to which the output unit 14 transmits various types of information may include, for example, a control computer for energy equipment. The control computer may control the energy equipment under a transmitted operating condition of the energy equipment. Furthermore, the control computer may receive a modification given by an operation operator to control the energy equipment. Here, examples of controlling energy equipment include increasing output of power generation equipment for reducing an amount of purchased electricity in a time slot with a high unit price of purchased electricity and discharging stored gas in a gas holder for increasing output of the power generation equipment.

Furthermore, the output unit 14 may display the above-described various types of information through a display device (not illustrated) (e.g., liquid crystal display (LCD), organic EL display (OLED), and touch panel display) connected to the information processing device 10. Furthermore, the output unit 14 may display, for example, a tuning screen at the time of various arithmetic operations in the optimization unit 13. Furthermore, the output unit 14 may include the display device, and display the above-described various types of information, the tuning screen, and the like.

For example, a predetermined ratio Ratio (see Mathematical Expressions (14) and (15) to be described later) with respect to an operational upper limit of energy equipment, which is contained in a constraint condition in the optimization calculation of the optimization unit 13, may be displayed on the tuning screen. Furthermore, for example, a weighting coefficient w (see Mathematical Expression (17) to be described later) preliminarily determined for the "cost associated with the adjustment variable" may be displayed on the tuning screen.

(Operation Plan/Performance Database)

The operation plan/performance database 20 is stored in a storage device including a recording medium such as an erasable programmable ROM (EPROM), a hard disk drive (HDD), and a removable medium.

The operation plan/performance database 20 stores information on an operation plan (hereinafter, referred to as "operation plan information") of a steel mill and information on operation performance (hereinafter, referred to as "operation performance information"). The operation plan information and the operation performance information are accumulated by, for example, an operation plan device (not illustrated) and an operation performance device (not illustrated), aggregated by an aggregation device (not illustrated), and then stored in the operation plan/performance database 20. Furthermore, the operation plan/performance database 20 may include a database server provided on the network N.

(Display Terminal Device)

The display terminal device 30 acquires various types of information from the information processing device 10, and displays the various types of information. The display terminal device 30 is implemented by, for example, a personal computer connected to the information processing device 10 via the network N. Furthermore, as illustrated in (b) of FIG. 2, the display terminal device 30 has a function of an information acquisition unit 31 and a function of an information display unit 32, for example.

The information acquisition unit 31 acquires information such as a result of optimization calculation from, for example, the information processing device 10, and displays the information through a display device (information display unit) (not illustrated) connected to the display terminal device 30. Furthermore, the display terminal device 30 may include the display device. Information such as a result of optimization calculation, which has been acquired via the network N from the information processing device 10, may be displayed.

The information acquisition unit 31 acquires, from the information processing device 10, information including operating conditions of energy utilities, which have been optimized in a facility in the steel mill. Furthermore, the information display unit 32 displays information acquired by the information acquisition unit 31.

For example, the information displayed by the information display unit 32 contains optimized operating conditions of energy utilities in a facility. The optimized operating conditions of energy utilities have been calculated by optimization calculation that minimizes an objective function including the cost associated with the adjustment variable of an energy utility and the total energy operation cost of the steel mill. The adjustment variable of an energy utility relaxes the operational upper limit determined with respect to the facility upper limit in output of the energy equipment of the steel mill. For example, an adjustment variable of an energy utility is contained. The adjustment variable of an energy utility is determined by a predetermined ratio with respect to a facility upper limit, which is an upper limit in output of facility capacity of the facility in the steel mill. In the adjustment variable of an energy utility, the difference between the operational upper limit and the facility upper limit is set as an upper limit. The operational upper limit is an upper limit in operation of the facility. Furthermore, the information displayed by the information display unit 32 contains cost associated with the adjustment variable, which is calculated based on, for example, the total energy operation cost of the steel mill, the unit price of the energy utility, and the predetermined weighting coefficient. Furthermore, the information displayed by the information display unit 32 contains the optimized operating conditions of energy utilities (energy operation conditions) in a facility, which have been calculated by optimization calculation based on, for example, a constraint condition in which output of the facility is set to be equal to or less than the sum of the operational upper limit and the adjustment variable.

The information display unit 32 displays at least the total energy operation cost of the steel mill, the operational upper limit, and the adjustment variable. Furthermore, the information display unit 32 may display the total energy operation cost of the steel mill, the operational upper limit of an energy utility, and the adjustment variable, which are contained in the information of a result of optimization calculation.

The display terminal device 30 may include a tuning screen display unit 33 that displays the tuning screen at the time of optimization arithmetic operation. For example, the tuning screen display unit 33 may set and display the predetermined ratio Ratio (see Mathematical Expressions (14) and (15) to be described later) with respect to an operational upper limit of energy equipment, which is contained in the constraint condition in the optimization calculation of the optimization unit 13. Furthermore, for example, the tuning screen display unit 33 may set and display the weighting coefficient w (see Mathematical Expression (17) to be described later) preliminarily determined for the "cost associated with the adjustment variable".

Furthermore, when the display terminal device 30 includes the tuning screen display unit 33, the information display unit 32 may display information containing an optimized energy operation condition in the facility in the steel mill. The optimized energy operation condition has been calculated by optimization calculation using the predetermined ratio Ratio and the weighting coefficient w, which are set and displayed by the tuning screen display unit 33.

Note that configurations in FIG. 1 and (a) and (b) of FIG. 2 are examples. The information processing device 10 and the display terminal device 30 are not required to include all the components in (a) and (b) of FIG. 2. Furthermore, the information processing device 10 and the display terminal device 30 may include a component other than the components in (a) and (b) of FIG. 2. Furthermore, components of the information processing device 10 and the display terminal device 30 are not limited to those in examples in (a) and (b) of FIG. 2.

For example, the optimization unit 13 and the information display unit 32 may be in the same device. Furthermore, for example, some of the components of the information processing device 10 in (a) of FIG. 2 may be provided on the side of the display terminal device 30. Furthermore, for example, some of the components of the display terminal device 30 in (b) of FIG. 2 may be provided on the side of the information processing device 10. Therefore, the energy operation support system including the information processing device 10 and the display terminal device 30 may include, as a whole, the response characteristic calculation unit 11, the upper-limit relaxation unit 12, the optimization unit 13, the output unit 14, the information acquisition unit 31, and the information display unit 32.

(Energy Operation Device)

The energy operation device according to the embodiment controls the facility (energy equipment) of the steel mill under the optimized operating conditions of energy utilities (energy operation conditions) in the facility of the steel mill, which have been output from the output unit 14 of the energy operation support system 1 (information processing device 10). The energy operation device is implemented by, for example, a control computer of energy equipment. Here, examples of controlling energy equipment include increasing output of power generation equipment for preventing an amount of purchased electricity from exceeding a contracted amount per hour (upper limit of amount of purchased electricity) and discharging stored gas from a gas holder for increasing output of the power generation equipment.

(Energy Operation Support Method)

The energy operation support method executed by the energy operation support system according to the embodiment will be described with reference to FIGS. 3 to 5. As illustrated in the figure, the energy operation support method includes a response characteristic calculation step (Steps S1 to S3), an upper-limit relaxation step (Steps S4 to S6), and an optimization step (Steps S7 to S9).

A flowchart of FIG. 3 starts at the timing when a command to execute an optimization calculation process is input to the information processing device 10. The optimization calculation process proceeds to a process of Step S1. Furthermore, Steps S1 to S3 may be performed at timing immediately before Steps S4 to S9, or may be preliminarily performed at timing different from the timing in Steps S4 to S9.

<Steps S1 to S3>

In the process of Step S1, the response characteristic calculation unit 11 reads response characteristics. The response characteristics are obtained by approximating a transition process of a response as a straight line, an exponential function (first-order lag), or the like in a transition period from equipment (energy equipment) shutdown to operation or a transition period from equipment operation to shutdown. For example, (a) of FIG. 4 illustrates an example of the response characteristics in a case where the transition process of a response is approximated as a straight line. Furthermore, (b) of the figure illustrates an example of the response characteristics in a case where the transition process of a response is approximated as an exponential function (first-order lag). Note that the figure illustrates the facility upper limits at the time of operation as "facility upper limits in steady state". In contrast, in the transition time from shutdown to operation, lines indicated by A in the figure indicate facility upper limits.

Subsequently, in a process of Step S2, the response characteristic calculation unit 11 calculates a facility upper limit in consideration of the response characteristics. Specifically, when the target time or the target calculation period falls within a transition period from equipment shutdown to operation or from operation to shutdown, the response characteristic calculation unit 11 calculates a facility upper limit at each time or in each calculation period in accordance with the response characteristics. Note that, when the target time or the target calculation period does not fall within the transition period, a value preliminarily given without considering the response characteristics is set as a facility upper limit.

FIG. 5 illustrates an example of a facility upper limit in a case where a transition process of a response in a transition period (transition time) from equipment shutdown to operation is set as a straight line and an exponential function (first-order lag). The inclination of the straight line is represented as "facility upper limit at time of equipment operation ÷ transition period from equipment shutdown to operation". Furthermore, the exponential function is represented as "first-order lag based on time constant (e.g., time to reach 63% of facility upper limit)".

Subsequently, in a process of Step S3, a facility upper limit (e.g., upper limit ($UB_{POW\ X}$) of power generation amount) in consideration of the response characteristics calculated in the process of Step S2 is stored in the operation plan/performance database 20. As described above, facility upper limits in consideration of response characteristics are preliminarily stored in a list of setting values, which enables an operator to browse the setting values.

<Steps S4 to S6>

In a process of Step S4, the upper-limit relaxation unit 12 reads a predetermined ratio related to an operational upper limit and an upper limit of an adjustment variable. The "predetermined ratio" is used to calculate an operational upper limit with respect to a facility upper limit, and is used to determine an operational upper limit for preventing deterioration of a facility from the facility upper limit. The predetermined ratio is not limited to a specific value. A value preliminarily determined in accordance with the characteristics of each facility is used.

Subsequently, in a process of Step S5, the upper-limit relaxation unit 12 calculates the operational upper limit and the upper limit of an adjustment variable. The operational upper limit can be calculated by multiplying the facility upper limit by the predetermined ratio. That is, "operational upper limit = facility upper limit × predetermined ratio" holds. Furthermore, the upper limit of an adjustment variable can be calculated by subtracting the operational upper limit from the facility upper limit. That is, "upper limit of adjustment variable = facility upper limit - operational upper limit = facility upper limit × (1 - predetermined ratio)" holds.

Subsequently, in a process of Step S6, the operational upper limit and the upper limit of an adjustment variable, which have been calculated in the process of Step S5, are stored in the operation plan/performance database 20.

<Steps S7 to S9>

In a process of Step S7, the optimization unit 13 performs optimization calculation. First, the optimization unit 13 acquires data of setting values of energy equipment in the steel mill as input data of the optimization calculation process.

For example, as indicated in Table 1, the data of setting values contains the following. Note that, in Table 1, "x" indicates the number of power generators.

Upper limit of power generation amount (x = 1U to NU) : $UB_{POW}$ x
Lower limit of power generation amount (x = 1U to NU): $LB_{POW}$ x
Upper limit of power generation change amount (x = 1U to NU): $UB_{POWDIF\ X}$
Lower limit of power generation change amount (x = 1U to NU): $LB_{POWDIF\ X}$
Upper limit of B gas holder (storage level): $UB_{B\ LEVEL}$
Lower limit of B gas holder (storage level): $LB_{B\ LEVEL}$
Upper limit of B gas holder (intake amount/discharge amount) : $UB_{B\ INOUT}$
Lower limit of B gas holder (intake amount/discharge amount) : $LB_{B\ INOUT}$
Upper limit of C gas holder (storage level): $UB_{C\ LEVEL}$
Lower limit of C gas holder (storage level): $LB_{C\ LEVEL}$
Upper limit of C gas holder (intake amount/discharge amount) : $UB_{C\ INOUT}$
Lower limit of C gas holder (intake amount/discharge amount) : $LB_{C\ INOUT}$
Upper limit of LD gas holder (storage level): $UB_{LD\ LEVEL}$
Lower limit of LD gas holder (storage level): $LB_{LD\ LEVEL}$
Upper limit of LD gas holder (intake amount/discharge amount) : $UB_{LD\ INOUT}$
Lower limit of LD gas holder (intake amount/discharge amount) : $LB_{LD\ INOUT}$
Upper limit of steam accumulator (storage level): $UB_{ST}$ LEVEL
Lower limit of steam accumulator (storage level): $LB_{ST}$ LEVEL
Upper limit of steam accumulator (intake amount/discharge amount): $UB_{ST\ INOUT}$
Lower limit of steam accumulator (intake amount/discharge amount): $LB_{ST\ INOUT}$
Predetermined ratio: Ratio
Weight of adjustment variable: w

Table 1

| Item | Setting value | Unit |
|---|---|---|
| Upper limit of power generation amount (x = 1U to NU) | $UB_{POW\ x}$ | MW |
| Lower limit of power generation amount (x = 1U to NU) | $LB_{POW\ x}$ | MW |
| Upper limit of power generation change amount (x = 1U to NU) | $UB_{POWDIF\ x}$ | MW/h |
| Lower limit of power generation change amount (x = 1U to NU) | $LB_{POWDIF\ x}$ | MW/h |
| Upper limit of B gas holder (storage level) | $UB_{B\ LEVEL}$ | GJ |
| Lower limit of B gas holder (storage level) | $LB_{B\ LEVEL}$ | GJ |
| Upper limit of B gas holder (intake amount/discharge amount) | $UB_{B\ INOUT}$ | GJ/h |
| Lower limit of B gas holder (intake amount/discharge amount) | $LB_{B\ INOUT}$ | GJ/h |
| Upper limit of C gas holder (storage level) | $UB_{C\ LEVEL}$ | GJ |
| Lower limit of C gas holder (storage level) | $LB_{C\ LEVEL}$ | GJ |
| Upper limit of C gas holder (intake amount/discharge amount) | $UB_{C\ INOUT}$ | GJ/h |
| Lower limit of C gas holder (intake amount/discharge amount) | $LB_{C\ INOUT}$ | GJ/h |
| Upper limit of LD gas holder (storage level) | $UB_{LD\ LEVEL}$ | GJ |
| Lower limit of LD gas holder (storage level) | $LB_{LD\ LEVEL}$ | GJ |
| Upper limit of LD gas holder (intake amount/discharge amount) | $UB_{LD\ INOUT}$ | GJ/h |
| Lower limit of LD gas holder (intake amount/discharge amount) | $LB_{LD\ INOUT}$ | GJ/h |
| Upper limit of steam accumulator (storage level) | $UB_{ST\ LEVEL}$ | ton |
| Lower limit of steam accumulator (storage level) | $LB_{ST\ LEVEL}$ | ton |
| Upper limit of steam accumulator (intake amount/discharge amount) | $UB_{ST\ INOUT}$ | ton/h |
| Lower limit of steam accumulator (intake amount/discharge amount) | $LB_{ST\ INOUT}$ | ton/h |

(continued)

| Item | Setting value | Unit |
|---|---|---|
| Predetermined ratio | Ratio | Real number |
| Weight of adjustment variable | w | Real number |

Furthermore, the optimization unit 13 acquires data of contract values necessary for calculating cost for energy operation of the steel mill as input data of the optimization calculation process. For example, as indicated in Table 2, the data of contract values contains the following. Note that, in Table 2, "k = 0" indicates the present, and "k = 1 to N" indicates the future. Furthermore, "N" is a final period of optimization calculation. For example, when N = 24 holds and a unit of 1 period = 5 minutes is used, "N" indicates the future after two hours.

Electricity purchase unit price: $P_{ELE}(k)$
Steam purchase unit price: $P_{ST}(k)$
Heavy oil purchase unit price: $P_{OIL}(k)$
City gas purchase unit price: $P_{TOG}(k)$

Table 2

| Item | Contract value (k = 0 to N) | Unit |
|---|---|---|
| Electricity purchase unit price | $P_{ELE}(k)$ | Yen/MWh |
| Steam purchase unit price | $P_{ST}(k)$ | Yen/ton |
| Heavy oil purchase unit price | $P_{OIL}(k)$ | Yen/GJ |
| City gas purchase unit price | $P_{TOG}(k)$ | Yen/GJ |

Furthermore, the optimization unit 13 acquires data of actual values of energy utilities in a factory of the steel mill at the present time (k = 0) as input data of the optimization calculation process. For example, as indicated in Tables 3 to 5 (see second column from left), the data of actual values contains the following.

B gas generation amount (factory total): $S_B(0)$
C gas generation amount (factory total): $S_C(0)$
LD gas generation amount (factory total): $S_{LD}(0)$
Steam generation amount (factory total): $S_{ST}(O)$
TRT power generation amount (all units): $S_{TRTELE}(0)$
Power generation facility power generation amount (x = 1U to NU): $S_{POW\ X}(0)$
B gas use amount (factory total): $D_B(0)$
C gas use amount (factory total): $D_C(0)$
LD gas use amount (factory total): $D_{LD}(0)$
M gas use amount (factory total): $D_{M\ PLANT}(0)$
Steam use amount (factory total): $D_{ST}(0)$
Electricity use amount (factory total): $D_{ELE}(0)$
B gas use amount (x = 1U to NU): $D_{B\ X}(0)$
C gas use amount (x = 1U to NU): $D_{C\ X}(0)$
LD gas use amount (x = 1U to NU): $D_{LD\ X}(0)$
M gas use amount (x = 1U to NU): $D_{M\ X}(0)$
Heavy oil use amount (x = 1U to NU): $D_{OIL\ X}(0)$
Extraction steam amount (x = 1U to NU): $S_{ST\ X}(0)$
City gas use amount (for power generation facility): $D_{TOG\ POW}(0)$
City gas use amount (for factory (for rolling)): $D_{TOG\ Mill}(0)$
B gas holder (storage level): $H_{B\ LEVEL}(0)$
B gas holder (intake amount/discharge amount): $H_B\ INOUT\ (0)$
C gas holder (storage level): $H_{C\ LEVEL}(0)$
C gas holder (intake amount/discharge amount): $H_C\ INOUT\ (0)$
LD gas holder (storage level): $H_{LD\ LEVEL}(0)$

LD gas holder (intake amount/discharge amount): $H_{LD\ INOUT}(0)$
Steam accumulator (storage level): $H_{ST\ LEVEL}(0)$
Steam accumulator (intake amount/discharge amount): $H_{ST\ INOUT}(0)$
Electricity purchase amount: $S_{ELE\ Purchase}(0)$
Steam purchase amount: $S_{ST\ Purchase}(0)$
M gas (B gas) for power generation facility: $D_{B\ POW}(0)$
M gas (C gas) for power generation facility: $D_{C\ POW}(0)$
M gas (LD gas) for power generation facility: $D_{LD\ POW}(0)$
M gas (city gas) for power generation facility: $D_{TOG\ POW}(0)$
M gas (B gas) for factory: $D_{B\ Mill}(0)$
M gas (C gas) for factory: $D_{C\ Mill}(0)$
M gas (LD gas) for factory: $D_{LD\ Mill}(0)$
M gas (city gas) for factory: $D_{TOG\ Mill}(0)$
Total energy operation cost: total _cost(0)
Adjustment variable: $dSUB_{POW\ j}(0)$

Table 3

| Item | Actual value (k = 0) | Predicted value (k = 1 to N) | Unit |
|---|---|---|---|
| B gas generation amount (factory total) | $S_B(0)$ | $S_B(k)$ | GJ/h |
| C gas generation amount (factory total) | $Sc(0)$ | $S_C(k)$ | GJ/h |
| LD gas generation amount (factory total) | $S_{LD}(0)$ | $S_{LD}(k)$ | GJ/h |
| Steam generation amount (factory total) | $S_{ST}(0)$ | $S_{ST}(k)$ | ton/h |
| TRT power generation amount (all units) | $S_{TRTELE}(0)$ | $S_{TRTELE}(k)$ | MW |
| Power generation facility power generation amount (x = 1U to NU) | $S_{POW\ x}(0)$ | $S_{POW\ x}(k)$ | MW |
| B gas use amount (factory total) | $D_B(0)$ | $D_B(k)$ | GJ/h |
| C gas use amount (factory total) | $D_C(0)$ | $D_C(k)$ | GJ/h |
| LD gas use amount (factory total) | $D_{LD}(0)$ | $D_{LD}(k)$ | GJ/h |
| M gas use amount (factory total) | $D_{M\ PLANT}(0)$ | $D_{M\ PLANT}(k)$ | GJ/h |
| Steam use amount (factory total) | $D_{ST}(0)$ | $D_{ST}(k)$ | ton/h |
| Electricity use amount (factory total) | $D_{ELE}(0)$ | $D_{ELE}(k)$ | MW |

Table 4

| Item | Actual value (k = 0) | Decision variable (k = 1 to N) | Unit |
|---|---|---|---|
| B gas use amount (x = 1U to NU) | $D_{B\ x}(0)$ | $D_{B\ x}(k)$ | GJ/h |
| C gas use amount (x = 1U to NU) | $Dc_x(0)$ | $Dc_x(k)$ | GJ/h |
| LD gas use amount (x = 1U to NU) | $D_{LD\ x}(0)$ | $D_{LD\ x}(k)$ | GJ/h |
| M gas use amount (x = 1U to NU) | $D_{M\ x}(0)$ | $D_{M\ x}(k)$ | GJ/h |
| Heavy oil use amount (x = 1U to NU) | $D_{OIL\ x}(0)$ | $D_{OIL\ x}(k)$ | GJ/h |
| Extraction steam amount (x = 1U to NU) | $S_{ST\ x}(0)$ | $S_{ST\ x}(k)$ | ton/h |
| City gas use amount (for power generation facility) | $D_{TOG\ POW}(0)$ | $D_{TOG\ POW}(k)$ | GJ/h |
| City gas use amount (for factory) | $D_{TOG\ Mill}(0)$ | $D_{TOG\ Mill}(k)$ | GJ/h |
| B gas holder (storage level) | $H_{B\ LEVEL}(0)$ | $H_{B\ LEVEL}(k)$ | GJ |
| B gas holder (intake amount/discharge amount) | $H_{B\ INOUT}(0)$ | $H_{B\ INOUT}(k)$ | GJ/h |
| C gas holder (storage level) | $H_{C\ LEVEL}(0)$ | $H_{C\ LEVEL}(k)$ | GJ |

(continued)

| Item | Actual value (k = 0) | Decision variable (k = 1 to N) | Unit |
|---|---|---|---|
| C gas holder (intake amount/discharge amount) | $H_{C\ INOUT}(0)$ | $H_{C\ INOUT}(k)$ | GJ/h |
| LD gas holder (storage level) | $H_{LD\ LEVEL}(0)$ | $H_{LD\ LEVEL}(k)$ | GJ |
| LD gas holder (intake amount/discharge amount) | $H_{LD\ INOUT}(0)$ | $H_{LD\ INOUT}(k)$ | GJ/h |
| Steam accumulator (storage level) | $H_{ST\ LEVEL}(0)$ | $H_{ST\ LEVEL}(k)$ | ton |
| Steam accumulator (intake amount/discharge amount) | $H_{ST\ INOUT}(0)$ | $H_{ST\ INOUT}(k)$ | ton/h |

Table 5

| Item | Actual value (k = 0) | Decision variable (k = 1 to N) | Unit |
|---|---|---|---|
| Electricity purchase amount | $S_{ELE\ Purchase}(0)$ | $SELE_{\ Purchase}(k)$ | MW |
| Steam purchase amount | $S_{ST}\ Purchase(0)$ | $SST_{\ Purchase}(k)$ | Ton/h |
| M gas (B gas) for power generation facility | $D_{B\ Pow}(0)$ | $D_{B\ pow}(k)$ | GJ/h |
| M gas (C gas) for power generation facility | $Dc_{\ POW}(0)$ | $Dc_{\ POW}(k)$ | GJ/h |
| M gas (LD gas) for power generation facility | $D_{LD\ POW}(0)$ | $D_{LD\ POW}(k)$ | GJ/h |
| M gas (city gas) for power generation facility | $D_{TOG\ POW}(0)$ | $D_{TOG\ POW}(k)$ | GJ/h |
| M gas (B gas) for factory | $D_{B\ Mill}(0)$ | $D_{B\ Mill}(k)$ | GJ/h |
| M gas (C gas) for factory | $Dc_{\ Mill}(0)$ | $D_{C\ Mill}(k)$ | GJ/h |
| M gas (LD gas) for factory | $D_{LD\ Mill}(0)$ | $D_{LD\ Mill}(k)$ | GJ/h |
| M gas (city gas) for factory | $D_{TOG\ Mill}(0)$ | $D_{TOG\ Mill}(k)$ | GJ/h |
| Total energy operation cost | total_cost(0) | total_cost(k) | Yen/h |
| Adjustment variable | $dSUB_{POW\ j}(0)$ | $dSUB_{POW\ j}(k)$ | MW |

Furthermore, the optimization unit 13 acquires data of predicted values of energy utilities in a factory in the steel mill at the future (k = 1 to N) as input data of the optimization calculation process. For example, as indicated in Table 3 above (see third column from left), the data of predicted values contains the following.

B gas generation amount (factory total): $S_B(k)$

C gas generation amount (factory total): $S_C(k)$

LD gas generation amount (factory total): $S_{LD}(k)$

Steam generation amount (factory total): $S_{ST}(k)$

TRT power generation amount (all units): $S_{TRTELE}(k)$

Power generation facility power generation amount (x = 1U to NU): $S_{POW\ X}(k)$

B gas use amount (factory total): $D_B(k)$

C gas use amount (factory total): $D_C(k)$

LD gas use amount (factory total): $D_{LD}(k)$

M gas use amount (factory total): $D_{M\ PLANT}(k)$

Steam use amount (factory total): $D_{ST}(k)$

Electricity use amount (factory total): $D_{ELE}(k)$

Subsequently, in the process of Step S7, optimization calculation for determining a condition that minimizes the total energy operation cost total_cost(k) involved in energy operation of the steel mill in the future predetermined period (k = 1 to N) is executed by using data acquired as described above.

As indicated in Tables 4 and 5 above (see third column from left), the decision variables (variables for search in order to minimize cost) in the optimization calculation in Step S7 contain the following.

B gas use amount (x = 1U to NU): $D_{B\ X}(k)$
C gas use amount (x = 1U to NU): $D_{C\ X}(k)$
LD gas use amount (x = 1U to NU): $D_{LD\ X}(k)$
M gas use amount (x = 1U to NU): $D_{M\ X}(k)$
Heavy oil use amount (x = 1U to NU): $D_{OIL\ X}(k)$
Extraction steam amount (x = 1U to NU): $S_{ST\ X}(k)$
City gas use amount (for power generation): $D_{TOG\ POW}(k)$
City gas use amount (for factory (for rolling)): $D_{TOG\ Mill}(k)$
B gas holder (storage level): $H_{B\ LEVEL}(k)$
B gas holder (intake amount/discharge amount): $H_{B\ INOUT}(k)$
C gas holder (storage level): $H_{C\ LEVEL}(k)$
C gas holder (intake amount/discharge amount): $H_{C\ INOUT}(k)$
LD gas holder (storage level): $H_{LD\ LEVEL}(k)$
LD gas holder (intake amount/discharge amount): $H_{LD\ INOUT}(k)$
Steam accumulator (storage level): $H_{ST\ LEVEL}(k)$
Steam accumulator (intake amount/discharge amount): $H_{ST\ INOUT}(k)$
Electricity purchase amount: $S_{ELE\ Purchase}(k)$
Steam purchase amount: $S_{ST\ Purchase}(k)$
M gas (B gas) for power generation facility: $D_{B\ POW}(k)$
M gas (C gas) for power generation facility: $D_{C\ POW}(k)$
M gas (LD gas) for power generation facility: $D_{LD\ POW}(k)$
M gas (city gas) for power generation facility: $D_{TOG\ POW}(k)$
M gas (B gas) for factory: $D_{B\ Mill}(k)$
M gas (C gas) for factory: $D_{C\ Mill}(k)$
M gas (LD gas) for factory: $D_{LD\ Mill}(k)$
M gas (city gas) for factory: $D_{TOG\ Mill}(k)$
Total energy operation cost: total_cost(k)
Adjustment variable: $dSUB_{POW\ j}(k)$

Furthermore, in Step S7, constraint conditions as indicated in Expressions (1) to (15) below are set at the time of optimization calculation. Note that "T" in Expressions (6) and (11) below is a time conversion value of one period. For example, when a unit of 1 period = 5 minutes is used, T = 5/60 (h) holds. Furthermore, a subscript "j" in Expressions (1) to (15) below indicates the number of energy equipment (e.g., power generator). That is, "$f_j$" is a function indicating the power generation characteristics of a power generator j. A power generation amount is output with a by-product gas generation amount and a steam generation amount as inputs, for example.

Here, Expression (1) below indicates a B gas balance. Furthermore, Expression (2) below indicates a C gas balance. Furthermore, Expression (3) below indicates an LD gas balance. Furthermore, Expression (4) below indicates an M gas balance of a factory. Furthermore, Expression (5) below indicates an M gas balance of a power generation facility. Furthermore, Expression (6) below indicates a gas holder. Furthermore, Expression (7) below indicates a power generation model. Furthermore, Expression (8) below indicates an electricity balance. Furthermore, Expression (9) below indicates a steam balance. Furthermore, Expressions (10) to (15) below indicate an upper and lower limit balance.

Furthermore, specifically, Expression (14) below is a constraint condition of setting output of energy equipment to be equal to or more than the lower limit of the energy equipment and equal to or less than the sum of the operational upper limit and an adjustment variable. Note that, in Expression (14) below, a case is indicated in which the energy equipment is a power generation facility and the power generation facility power generation amount ($S_{POW\ X}(k)$) is equal to or more than a lower limit ($LB_{POW\ j}$) of a power generation amount and equal to the sum ($RatioUB_{POW\ j}+dSUB_{POW\ j}(k)$) of the operational upper limit and the adjustment variable. The same applies to the by-product gas generation amount and the steam generation amount.

Furthermore, specifically, Expression (15) below is a constraint condition indicating the lower limit and the upper limit of the adjustment variable ($dSUB_{POW\ j}(k)$). That is, as indicated in Expression (15) below, the adjustment variable

$(dSUB_{POW\,j}(k))$ is a real number having a lower limit of 0 and an upper limit of "$(1-Ratio)UB_{POW}\,x(k)$".

$$S_B(k) = D_B(k) + D_{B\,Pow}(k) + D_{B\,Mill}(k) + \underbrace{\sum_{j=1U}^{NU} D_{B\,j}(k)}_{\text{For M gas}} + \underbrace{H_{B\,INOUT}(k)}_{\substack{\text{For power} \\ \text{generation} \\ \text{facility}}} \qquad \cdots (1)$$

For M gas  For power generation facility  Gas holder intake amount

$$S_C(k) = D_C(k) + D_{C\,Pow}(k) + D_{C\,Mill}(k) + \sum_{j=1U}^{NU} D_{C\,j}(k) + H_{C\,INOUT}(k) \qquad \cdots (2)$$

For M gas  For power generation facility  Gas holder intake amount

$$S_{LD}(k) = D_{LD}(k) + D_{LD\,Pow}(k) + D_{LD\,Mill}(k) + \sum_{j=1U}^{NU} D_{LD\,j}(k) + H_{LD\,INOUT}(k) \qquad \cdots (3)$$

For M gas  For power generation facility  Gas holder intake amount

$$D_{M\,PLANT}(k) = D_{B\,Mill}(k) + D_{C\,Mill}(k) + D_{LD\,Mill}(k) + D_{TOG\,Mill}(k) \qquad \cdots (4)$$

$$\sum_{j=1U}^{NU} D_{M\,j}(k) = D_{B\,Pow}(k) + D_{C\,Pow}(k) + D_{LD\,Pow}(k) + D_{TOG\,Pow}(k) \qquad \cdots (5)$$

$$H_{i\,Level}(k) = H_{i\,Level}(k-1) + H_{i\,INOUT}(k)T \qquad \cdots (6)$$
$$_{,i=B,C,LD}$$

$$S_{POWj}(k) = f_j\left(D_{Bj}(k) + D_{Cj}(k) + D_{LDj}(k) + D_{Mj}(k) + D_{OILj}(k), S_{STj}(k)\right) \qquad \cdots (7)$$

$$D_{ELE}(k) = S_{TRTELE}(k) + \sum_{j=1U}^{NU} S_{POW\,j}(k) + S_{ELE\,Purchase}(k) \qquad \cdots (8)$$

$$D_{ST}(k) = S_{ST}(k) + \sum_{j=1U}^{NU} S_{ST\,j}(k) + S_{ST\,Purchase}(k) \qquad \cdots (9)$$

$$LB_{POW\,j} \leq S_{POW\,j}(k) \leq UB_{POW\,j} \qquad \cdots (10)$$

$$LB_{POWDIF\ j} \leq \left(S_{POW\ j}(k) - S_{POW\ j}(k-1)\right)/T \leq UB_{POWDIF\ j} \qquad \cdots (11)$$

$$LB_{i\ LEVEL} \leq H_{i\ Level}(k) \leq UB_{i\ LEVEL} \qquad \cdots (12)$$
$$\scriptstyle ,i=B,C,LD$$

$$LB_{i\ INOUT} \leq H_{i\ INOUT}(k) \leq UB_{i\ INOUT} \qquad \cdots (13)$$
$$\scriptstyle ,i=B,C,LD$$

$$LB_{POWj} \leq S_{POWj}(k) \leq Ratio\ UB_{POWj} + dSUB_{POWj}(k) \qquad \cdots (14)$$

$$0 \leq dSUB_{POWj}(k) \leq (1 - Ratio)UB_{POWj} \qquad \cdots (15)$$

As indicated in Expression (16) below, the total energy operation cost total_cost(k) to be minimized in Step S7 is the sum of heavy oil (OIL), city gas (TOG), steam (ST), and an amount of purchased electricity (ELE). Furthermore, unit prices are as indicated in Table 2 above.

$$total\_cost(k) = P_{ELE}(k)S_{ELE\ Purchase}(k) + P_{ST}(k)S_{ST\ Purchase}(k) + P_{OIL}(k)\sum_{j=1U}^{NU} D_{OIL\ j}(k) \qquad \cdots (16)$$
$$+ P_{TOG}(k)\left(D_{TOG\ Pow}(k) + D_{TOG\ Mill}(k)\right)$$

As indicated in Expression (17) below, these pieces of information are used to calculate the sum of a total value of costs from the present time to the time after N periods and cost associated with the adjustment variable (apparent cost for adjustment variable). As indicated in Expression (17) below, the apparent cost is generated for a power generation amount exceeding the operational upper limit. Since multiplication is performed by using a weight w, the cost is less expensive than cost of purchased electricity. A mechanism is established in which power is generated beyond the operational upper limit in the power generation facility at the time when electricity is purchased. Note that, in Expression (17) below, the adjustment variable supports electricity, so that the electricity purchase unit price ($P_{ELE}$(k)) is used. When the adjustment variable supports steam, heavy oil, and city gas, however, the steam purchase unit price, the heavy oil purchase unit price, and the city gas purchase unit price may be used.

$$\sum_{k=1}^{N} total\_cost(k) + wP_{ELE}(k)\ dSUB_{POWj}(k) \qquad \cdots (17)$$

Subsequently, in a process of Step S8, the optimization unit 13 causes, for example, the display terminal device 30 to display a result of optimization calculation. Subsequently, in a process of Step S9, the optimization unit 13 determines whether or not the optimization calculation has ended. When the optimization calculation has ended, the process is completed. When the optimization calculation has not ended, the process returns to Step S1.

(Steel Mill Operation Method)

The steel mill operation method according to the embodiment includes a step of operating a steel mill in accordance with the decision variables (see Tables 4 and 5) calculated by optimization calculation of an energy operation support method in the above-described steel mill. In the steel mill operation method according to the embodiment, an operational upper limit is provided to avoid facility deterioration for a facility related to energy utilities of the steel mill. This can minimize energy operation cost of the steel mill while relaxing the operational upper limit in accordance with operational cost.

In the energy operation support device, the energy operation support system, the energy operation device, the display terminal device, the energy operation support method, and the steel mill operation method according to the above-described embodiment, the operational upper limit is relaxed by introducing an adjustment variable of output in which a difference obtained by subtracting an operational upper limit from a facility upper limit is set as an upper limit and setting the sum of the adjustment variable and the operational upper limit as an output upper limit. Furthermore, apparent power generation cost (obtained by multiplying unit price of purchased electricity by weight) is added to an objective function of optimization calculation. The apparent power generation cost is set to be less expensive than purchased electricity. A mechanism of generating power beyond the operational upper limit is thus established instead of inhibiting electricity purchase. Furthermore, the same applies to a case in consideration of response characteristics in a transition period from shutdown to operation or a transition period from operation to shutdown.

As described above, in the energy operation support device, the energy operation support system, the energy operation device, the display terminal device, the energy operation support method, and the steel mill operation method according to the above-described embodiment, an adjustment variable is added in addition to the operational upper limit in order to relax the operational upper limit of energy equipment, and an upper limit of an energy utility is set in order to give permission up to the facility upper limit. This can minimize operational cost in consideration of relaxation of the operational upper limit. Furthermore, the facility upper limit is set so as to gradually change in consideration of response characteristics at the time of startup and shutdown associated with energy equipment stoppage. Also in this case, effects similar to the above-described effects are expected.

As described above, in the energy operation support device, the energy operation support system, the energy operation device, the display terminal device, the energy operation support method, and the steel mill operation method according to the embodiment, the operational upper limit is determined with respect to the facility upper limit, operational cost is evaluated, and the operational upper limit is relaxed, so that both prevention of equipment deterioration and optimization of the operational cost can be achieved.

[Examples]

Examples of the energy operation support method according to the present invention will be described with reference to FIGS. 6 to 9. In the examples, one period was set as five minutes. Optimization calculation was performed up to the time after 24 periods. The display terminal device displayed a calculation result.

In Example 1, the upper-limit relaxation step and the optimization step were performed in a time slot when a power generation facility operated. In Example 1, response characteristics in a transition period from operation to shutdown or shutdown to operation are not considered.

FIG. 6 illustrates normalized output (value obtained by dividing power generation output by facility upper limit and centuplicating result) in a case where optimization calculation was performed by setting a predetermined ratio with respect to a facility upper limit of a certain power generation facility a predetermined ratio with respect to a facility upper limit of a certain power generation facility to 0.5 and setting the weight of an adjustment variable to 0.01. As illustrated in the figure, it can be seen that, in a case with upper-limit relaxation (see solid line), the normalized output increases accompanying the upper-limit relaxation as compared to that in a case without the upper-limit relaxation (see dot-dashed line).

Subsequently, FIG. 7 illustrates a cost ratio (operational cost with relaxation ÷ operational cost without relaxation) calculated by setting the predetermined ratio with respect to the facility upper limit of the certain power generation facility at 0.1 intervals from 0.1 to 1.0 and setting the weight of the adjustment variable to 0.01. As illustrated in the figure, it can be seen that the operational cost with the upper-limit relaxation is reduced in accordance with the predetermined ratio. In particular, when the predetermined ratio is less than 0.4, the operational cost with the upper-limit relaxation is reduced by 20%.

In Example 2, upper-limit relaxation and optimization were performed in consideration of the response characteristics in a time slot including a transition period from shutdown to operation of a power generation facility.

FIG. 8 illustrates normalized output (value obtained by dividing power generation output by facility upper limit and centuplicating result) in a case where optimization calculation was performed by setting a predetermined ratio with respect to a facility upper limit of a certain power generation facility to 0.5 and setting the weight of an adjustment variable to 0.01. As illustrated in the figure, in a case with upper-limit relaxation (see solid line), power is generated in accordance with response characteristics in the transition period from shutdown to operation in order to avoid electricity purchase if possible. In contrast, in a case without the upper-limit relaxation (see dot-dashed line), output is inhibited in order to follow the operational upper limit.

FIG. 9 illustrates a cost ratio (operational cost with relaxation ÷ operational cost without relaxation) calculated by setting the predetermined ratio with respect to the facility upper limit of the certain power generation facility at 0.1 intervals from 0.1 to 1.0 and setting the weight of the adjustment variable to 0.01. As illustrated in the figure, although the operational cost does not greatly change even if the predetermined ratio is changed, the operational cost with the upper-limit relaxation is reduced by just under 10% when the predetermined ratio is less than 0.4.

As described above, according to the energy operation support device, the energy operation support system, the energy operation device, the display terminal device, the energy operation support method, and the steel mill operation method according to the present invention, an operational upper limit is provided in order to avoid facility deterioration, and operational cost can be minimized while relaxing the operational upper limit in accordance with the operational cost.

Although the energy operation support device, the energy operation support system, the energy operation device, the display terminal device, the energy operation support method, and the steel mill operation method according to the present invention have been specifically described above with reference to the embodiment for carrying out the invention and the examples, the gist of the present invention is not limited to these descriptions, and should be widely interpreted based on the description of claims. Furthermore, it goes without saying that various changes, modifications, and the like based on these descriptions are also included in the gist of the present invention.

Reference Signs List

1      ENERGY OPERATION SUPPORT SYSTEM

10     INFORMATION PROCESSING DEVICE

11     RESPONSE CHARACTERISTIC CALCULATION UNIT

12     UPPER-LIMIT RELAXATION UNIT

13     OPTIMIZATION UNIT

14     OUTPUT UNIT

20     OPERATION PLAN/PERFORMANCE DATABASE

30     DISPLAY TERMINAL DEVICE

31     INFORMATION ACQUISITION UNIT

32     INFORMATION DISPLAY UNIT

33     TUNING SCREEN DISPLAY UNIT

N      NETWORK

**Claims**

1.  An energy operation support device in a steel mill, comprising:

    an optimization unit configured to optimize operation of an energy utility in a facility in the steel mill; and
    an upper-limit relaxation unit configured to set an operational upper limit, which is an upper limit in operation, with respect to a facility upper limit, which is an upper limit in output of facility capacity of the facility,
    wherein the upper-limit relaxation unit is configured to set the operational upper limit at a target time or in a target calculation period by determining a predetermined ratio with respect to the facility upper limit, and
    a total energy operation cost of the steel mill and an adjustment variable of an energy utility with a difference between the facility upper limit and the operational upper limit as an upper limit are included as an objective function of optimization calculation in the optimization unit.

2.  The energy operation support device according to claim 1, wherein the optimization unit is configured to perform the optimization calculation under a constraint condition in which output of the facility is set to be equal to or less than a sum of the operational upper limit and the adjustment variable.

3.  The energy operation support device according to claim 1,

    wherein the total energy operation cost and cost associated with the adjustment variable are included as an objective function of optimization calculation in the optimization unit, and
    the cost associated with the adjustment variable is calculated based on a unit price of the energy utility and a predetermined weighting coefficient.

4.  The energy operation support device according to claim 3,

wherein the energy utility is a power generation amount given by a power generation facility, and
the unit price of the energy utility is cost associated with a unit price of purchased electricity.

5. The energy operation support device according to claim 1, further comprising

a response characteristic calculation unit configured to calculate a facility upper limit in consideration of a response characteristic of the energy utility in a transition period from shutdown to operation or a transition period from operation to shutdown based on an equipment shutdown plan,
wherein the upper-limit relaxation unit is configured to set the operational upper limit by using a facility upper limit in consideration of the response characteristic.

6. The energy operation support device according to claim 1, wherein the energy utility includes an amount of power generated by a power generation facility, a by-product gas generation amount, and a steam generation amount.

7. The energy operation support device according to claim 1, further comprising an output unit configured to output information calculated by the optimization unit, the information containing an operating condition of an energy utility in the facility.

8. An energy operation support system in a steel mill including an energy operation support device and a display terminal device, the energy operation support system comprising:

an optimization unit configured to optimize operation of an energy utility in a facility in the steel mill;
an upper-limit relaxation unit configured to set an operational upper limit, which is an upper limit in operation, with respect to a facility upper limit, which is an upper limit in output of facility capacity of the facility;
an output unit configured to output information calculated by the optimization unit, the information including an operation condition of an energy utility in the facility;
an information acquisition unit configured to acquire information including an operating condition of an energy utility, which has been optimized, in the facility; and
an information display unit configured to display information acquired by the information acquisition unit,
wherein the upper-limit relaxation unit is configured to set the operational upper limit at a target time or in a target calculation period by determining a predetermined ratio with respect to the facility upper limit, and
a total energy operation cost of the steel mill and an adjustment variable of an energy utility with a difference between the facility upper limit and the operational upper limit as an upper limit are included as an objective function of optimization calculation in the optimization unit.

9. The energy operation support system according to claim 8, wherein the optimization unit is configured to perform optimization calculation under a constraint condition in which output of the facility is set to be equal to or less than a sum of the operational upper limit and the adjustment variable.

10. The energy operation support system according to claim 8,

wherein the total energy operation cost and cost associated with the adjustment variable are included as an objective function of optimization calculation in the optimization unit, and
the cost associated with the adjustment variable is calculated based on a unit price of the energy utility and a predetermined weighting coefficient.

11. The energy operation support system according to claim 10,

wherein the energy utility is a power generation amount given by a power generation facility, and
the unit price of the energy utility is cost associated with a unit price of purchased electricity.

12. The energy operation support system according to claim 8, further comprising

a response characteristic calculation unit configured to calculate a facility upper limit in consideration of a response characteristic of the energy utility in a transition period from shutdown to operation or a transition period from operation to shutdown based on an equipment shutdown plan,
wherein the upper-limit relaxation unit is configured to set the operational upper limit by using a facility upper limit in consideration of the response characteristic.

13. The energy operation support system according to claim 8, further comprising a tuning screen display unit configured to set and display the predetermined ratio of the operational upper limit with respect to the facility upper limit and a weighting coefficient of cost associated with the adjustment variable.

14. An energy operation device that controls a facility in a steel mill under an operating condition of an energy utility, which has been output from an output unit of the energy operation support device according to claim 7.

15. An energy operation device that controls a facility in a steel mill under an operating condition of an energy utility, which has been output from an output unit of the energy operation support system according to claim 8.

16. A display terminal device constituting an energy operation support system in a steel mill, comprising:

an information acquisition unit configured to acquire information including an operating condition of an energy utility, which has been optimized, in a facility in the steel mill; and
an information display unit configured to display the information,
wherein the information includes an operating condition of an energy utility, which has been optimized, in the facility, the operating condition of an energy utility being calculated by optimization calculation that minimizes an objective function including a cost associated with an adjustment variable of an energy utility, which relaxes an operational upper limit determined with respect to a facility upper limit in output of energy equipment of the steel mill, and a total energy operation cost of the steel mill.

17. The display terminal device according to claim 16,

wherein the display terminal device includes a tuning screen display unit configured to set and display a predetermined ratio of the operational upper limit used in the optimization calculation with respect to the facility upper limit and a weighting coefficient of the cost associated with the adjustment variable with respect to the total energy operation cost of the steel mill, and
the information display unit is configured to display the information calculated by optimization calculation using the predetermined ratio set and displayed by the tuning screen display unit and the weighting coefficient.

18. An energy operation support method, by an energy operation support device in a steel mill, comprising:

an optimization step of optimizing operation of an energy utility in a facility in the steel mill; and
an operational upper limit setting step of setting an operational upper limit, which is an upper limit in operation, with respect to a facility upper limit, which is an upper limit in output of facility capacity of the facility,
wherein, in the operational upper limit setting step, the operational upper limit at a target time or in a target calculation period is set by determining a predetermined ratio with respect to the facility upper limit, and
a total energy operation cost of the steel mill and an adjustment variable of an energy utility with a difference between the facility upper limit and the operational upper limit as an upper limit are included as an objective function of optimization calculation in the optimization step.

19. The energy operation support method according to claim 18, further comprising

a response characteristic calculation step of the energy operation support device calculating a facility upper limit in consideration of a response characteristic of the energy utility in a transition period from shutdown to operation or a transition period from operation to shutdown based on an equipment shutdown plan,
wherein, in the operational upper limit setting step, the operational upper limit is set by using a facility upper limit in consideration of the response characteristic.

20. A steel mill operation method comprising a step of operating a steel mill in accordance with a decision variable calculated by optimization calculation of the energy operation support method according to claim 19.

# FIG.1

# FIG.2

10

INFORMATION PROCESSING
DEVICE

(a)

11

RESPONSE
CHARACTERISTIC
CALCULATION UNIT

12

UPPER-LIMIT
RELAXATION UNIT

13

OPTIMIZATION UNIT

14

OUTPUT UNIT

30

DISPLAY TERMINAL DEVICE

(b)

31

INFORMATION
ACQUISITION UNIT

32

INFORMATION
DISPLAY UNIT

33

TUNING SCREEN
DISPLAY UNIT

# FIG.3

```
                    ┌─────────────┐
                    │    START    │
                    └──────┬──────┘
                           │                    ⌐S1
                    ┌──────▼──────────┐
          ┌────────►│ READ RESPONSE   │
          │         │ CHARACTERISTICS │
          │         └──────┬──────────┘
          │                │                    ⌐S2
          │         ┌──────▼──────────────────┐
          │         │ CALCULATE FACILITY UPPER │
          │         │ LIMIT IN CONSIDERATION   │
          │         │ OF RESPONSE              │
          │         │ CHARACTERISTICS          │
          │         └──────┬───────────────────┘
          │                │                    ⌐S3
          │         ┌──────▼──────────────┐
          │         │ STORE CALCULATION    │
          │         │ RESULT IN DB         │
          │         └──────┬───────────────┘
          │                │                    ⌐S4
          │         ┌──────▼──────────────┐
          │         │ READ PREDETERMINED   │
          │         │ RATIO                │
          │         └──────┬───────────────┘
          │                │                    ⌐S5
          │         ┌──────▼───────────────────┐
          │         │ CALCULATE OPERATIONAL     │
          │         │ UPPER LIMIT AND UPPER     │
          │         │ LIMIT OF ADJUSTMENT       │
          │         │ VARIABLE                  │
          │         └──────┬────────────────────┘
          │                │                    ⌐S6
          │         ┌──────▼──────────────┐
          │         │ STORE CALCULATION    │
          │         │ RESULT IN DB         │
          │         └──────┬───────────────┘
          │                │                    ⌐S7
          │         ┌──────▼──────────────┐
          │         │ OPTIMIZATION         │
          │         │ CALCULATION          │
          │         └──────┬───────────────┘
          │                │                    ⌐S8
          │         ┌──────▼──────────────┐
          │         │ DISPLAY RESULT OF    │
          │         │ OPTIMIZATION         │
          │         │ CALCULATION          │
          │         └──────┬───────────────┘
          │                │                    ⌐S9
          │     NO  ◇──────▼──────◇
          └────────◇ HAS CALCULATION│
                    ◇   ENDED?      ◇
                    ◇───────┬───────◇
                            │ YES
                    ┌───────▼─────┐
                    │     END     │
                    └─────────────┘
```

# FIG.4

TRANSITION PROCESS:
STRAIGHT LINE

(a)

A

OPERATION

FACILITY
UPPER LIMIT IN
STEADY STATE

SHUTDOWN

TRANSITION TIME

TIME

TRANSITION PROCESS:
FIRST-ODER LAG

(b)

TIME CONSTANT

A

OPERATION

FACILITY
UPPER LIMIT IN
STEADY STATE

63% OF FACILITY
UPPER LIMIT

SHUTDOWN

TRANSITION TIME

TIME

## FIG.5

| CALCULATION PERIOD OF TRANSITION PERIOD | FACILITY UPPER LIMIT (TRANSITION PROCESS: STRAIGHT LINE) | FACILITY UPPER LIMIT (TRANSITION PROCESS: FIRST-ODER LAG) |
|---|---|---|
| 0 | 0 | 0 |
| 1 | FACILITY UPPER LIMIT AT TIME OF OPERATION*1/M | FACILITY UPPER LIMIT AT TIME OF OPERATION*(1-exp(-1/K)) |
| 2 | FACILITY UPPER LIMIT AT TIME OF OPERATION*2/M | FACILITY UPPER LIMIT AT TIME OF OPERATION*(1-exp(-2/K)) |
| ... | ... | ... |
| M | FACILITY UPPER LIMIT AT TIME OF OPERATION | FACILITY UPPER LIMIT AT TIME OF OPERATION |

K:TIME CONSTANT
(TIME TO REACH 63% OF FACILITY UPPER LIMIT)

EP 4 760 624 A1

# FIG.6

(PREDETERMINED RATIO:0.5)

———— WITH UPPER-LIMIT RELAXATION   ----- WITHOUT UPPER-LIMIT RELAXATION

# FIG.7

# FIG.8

(PREDETERMINED RATIO:0.5)

WITH UPPER-LIMIT RELAXATION ——    WITHOUT UPPER-LIMIT RELAXATION - - - -    RESPONSE CHARACTERISTICS - - - - - -

# FIG.9

## INTERNATIONAL SEARCH REPORT

| International application No. |
|---|
| **PCT/JP2024/019249** |

| A. | CLASSIFICATION OF SUBJECT MATTER |
|---|---|

*G06Q 50/04*(2012.01)i; *G06Q 10/04*(2023.01)i
FI:  G06Q50/04; G06Q10/04

According to International Patent Classification (IPC) or to both national classification and IPC

| B. | FIELDS SEARCHED |
|---|---|

Minimum documentation searched (classification system followed by classification symbols)

G06Q50/04; G06Q10/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 7040676 B2 (JFE STEEL CORPORATION) 23 March 2022 (2022-03-23) entire text, all drawings | 1-20 |
| A | JP 2021-136695 A (HITACHI, LTD.) 13 September 2021 (2021-09-13) entire text, all drawings | 1-20 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **31 July 2024** | **13 August 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

| International application No. |
| --- |
| **PCT/JP2024/019249** |

| Patent document cited in search report | | | Publication date (day/month/year) | Patent family member(s) | | | Publication date (day/month/year) |
| --- | --- | --- | --- | --- | --- | --- | --- |
| JP | 7040676 | B2 | 23 March 2022 | EP | 4138008 | A1 | |
| | | | | entire text, all drawings | | | |
| | | | | WO | 2021/210290 | A1 | |
| | | | | KR | 10-2022-0132576 | A | |
| | | | | CN | 115210730 | A | |
| JP | 2021-136695 | A | 13 September 2021 | EP | 4109700 | A1 | |
| | | | | entire text, all drawings | | | |
| | | | | WO | 2021/166534 | A1 | |

Form PCT/ISA/210 (patent family annex) (July 2022)

**REFERENCES CITED IN THE DESCRIPTION**

**Patent documents cited in the description**

- JP 7028272 B